Europäisches Patentamt

European Patent Office

Office européen des brevets

(19)

(11) Numéro de publication: **0 092 467
B1**

(12)

# FASCICULE DE BREVET EUROPEEN

(45) Date de publication du fascicule du brevet:
**21.08.85**

(51) Int. Cl.⁴: **F 02 B 37/14**

(21) Numéro de dépôt: **83400729.6**

(22) Date de dépôt: **12.04.83**

(54) **Turbo compresseur de suralimentation.**

(30) Priorité: **15.04.82 FR 8206504**

(43) Date de publication de la demande:
**26.10.83 Bulletin 83/43**

(45) Mention de la délivrance du brevet:
**21.08.85 Bulletin 85/34**

(84) Etats contractants désignés:
**DE GB IT**

(56) Documents cités:
**EP - A - 0 022 678
DE - A - 3 008 181
DE - A - 3 029 768
US - A - 2 968 914**

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Audinet, Michel, 4, rue du Collège Technique,
F-78210-St. Cyr L'Ecole (FR)**

(74) Mandataire: **Fabien, Henri et al, PEUGEOT SA. DAT /
BPI 18, rue des Fauvelles, F-92250 La
Garenne-Colombes (FR)**

BUNDESDRUCKEREI BERLIN

## Description

L'invention est du domaine des turbocompresseurs de suralimentation de moteur à combustion interne pour l'équipement des véhicules, du genre de ceux qui comprennent une turbine entrainée par les gaz d'échappement et une turbine hydraulique d'appoint.

On sait que la turbine entrainée par les gaz d'échappement dispose d'un couple insuffisant aux bas régimes, notamment en cas d'accélération à partir d'une faible vitesse, le rôle de la turbine hydraulique d'appoint est de fournir le complément d'énergie nécessaire.

On a déjà proposé des turbocompresseurs de suralimentation du type précédent, équipés d'une pompe haute pression, propre à fournir le fluide qui alimente la turbine d'appoint; avec des moyens d'enclenchement qui interviennent lorsque la puissance de la turbine à gaz est insuffisante. Ces moyens peuvent comporter, soit un embrayage permettant d'accoupler ou de désaccoupler la pompe, soit une électrovanne permettant d'orienter l'huile sous pression vers la turbine ou vers un circuit de retour.

On a également proposé, par exemple dans les brevets EP-A-0 022 678 et DE-A-3 008 181, l'alimentation de la turbine hydraulique de brancher un circuit haute pression sur le circuit de lubrification et d'utiliser la même huile pour la lubrification des paliers du turbocompresseur et pour l'entrainement de la turbine, ce qui élimine tout danger de mélange. Cependant l'huile de lubrification n'a pas les qualités de viscosité et de tenue en température idéales pour servir dans les circuits hydrauliques haute pression, surtout quand cette haute pression qui pourrait être de 170 bars, intervient dans d'autres circuits auxiliaires du véhicule tels que la suspension, l'assistance à la direction, le freinage etc.

L'invention propose une solution conciliant tous les impératifs précédents, elle permet à la fois

— l'entrainement de la turbine hydraulique du turbocompresseur par l'huile de lubrification en haute pression,

— le graissage des paliers du turbocompresseur par l'huile de lubrification en basse pression,

— l'utilisation d'une huile spéciale pour les circuits hydrauliques du véhicule.

L'invention consiste en des moyens pour transmettre la haute pression du circuit hydraulique du véhicule à une partie du circuit de lubrification affectée à l'entrainement de la turbine hydraulique du turbocompresseur.

La figure 1 représente un schéma de l'installation.

La figure 2 représente une variante.

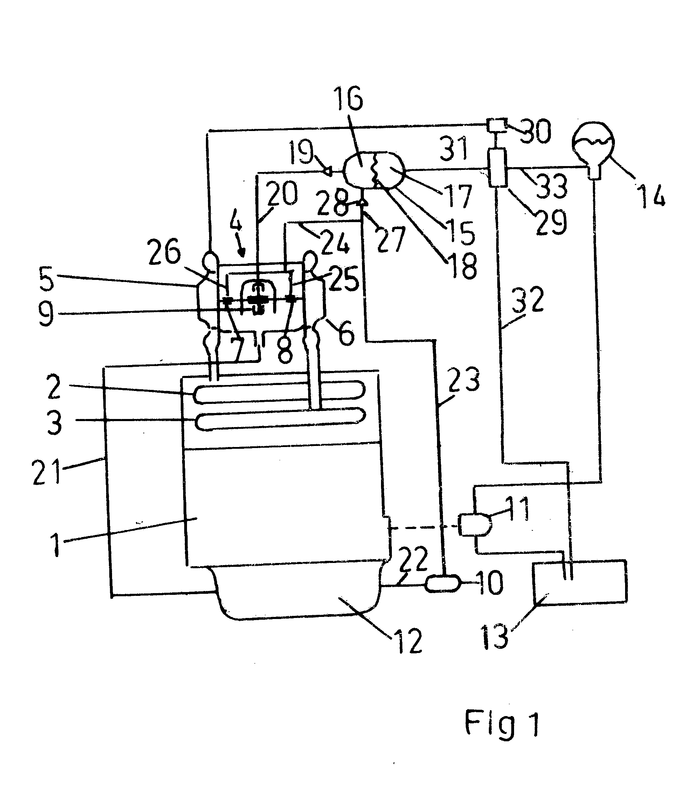

On voit sur la figure 1 un moteur à combustion interne 1 avec son circuit d'admission 2 et son circuit d'échappement 3, il est relié à un turbocompresseur 4 dont le compresseur 5 alimente l'admission 2 et dont la turbine à gaz 6 est entrainée par l'échappement 3. L'arbre commun au compresseur 5 et à la turbine 6 repose sur deux paliers 7 et 8, il porte une turbine hydraulique 9 qui fournit la puissance d'appoint en basse vitesse.

Le moteur 1 entraine en permanence la pompe 10 d'huile de lubrification et la pompe 11 du circuit hydraulique du véhicule. L'huile de lubrification est prélevée dans le carter 12 du moteur 1, elle est portée par la pompe 1C à une pression d'environ 5 bars et circule dans tous les circuits de lubrification du moteur et en particulier dans le circuit de lubrification des paliers 7 et 8 du turbocompresseur.

L'huile du circuit hydraulique est prélevée dans un réservoir 13 elle est portée à une pression d'environ 170 bars et charge un accumulateur haute pression à membrane 14, la membrane servant à séparer l'huile sous pression et un volume d'azote qui joue le rôle de ressort. La pression de l'accumulateur 14 est régulée par un conjoncteur-disjoncteur non représenté. L'accumulateur 14 alimente en huile sous pression toutes les servitudes hydrauliques du véhicule, suspension, freinage, assitance à la direction etc.

Une capacité 15 se compose de deux volumes 16 et 17 séparés par une membrane 18, le volume 16 est relié au circuit de lubrification et le volume 17 au circuit hydraulique.

Quand la pression du circuit hydraulique est admise du côté 17, elle est transmise par la membrane au volume 16 et l'huile de lubrification portée en haute pression passe par le clapet de retenue 19, puis par le conduit 20 et pénètre dans la turbine hydraulique 9, elle retourne au carter moteur par le conduit 21.

Quand le volume 17 est relié au réservoir hydraulique 13 la pression dans le volume 16 est égale à la pression du circuit de lubrification; le clapet de retenue 19 ferme le circuit 20 pour éviter un écoulement permanent vers la turbine 9.

La pompe à huile 10 du circuit de lubrification, prélève l'huile au carter moteur 12 par le conduit 22, la porte à la pression de lubrification qui est d'environ 5 bars et la répartit dans ce circuit par le conduit 23 qui aboutit en particulier aux paliers 7 et 8 du turbocompresseur par les conduits 24, 25 et 26. Le conduit 27 sert à alimenter le volume 16 de la capacité 15 à travers un clapet antiretour 28. Ce clapet évite une montée en pression du circuit de lubrification quand le volume 16 est porté en haute pression.

Une électrovanne à trois voies 29 commandée par un manocontact 30 est reliée par un conduit 31 au volume 17 de la capacité 15, au réservoir hydraulique 13 par le conduit 32 et à l'accumulateur hydraulique 14 par le conduit 33. Selon que l'électrovanne 29 reçoit ou non un signal du manocontact 30, elle met le volume 17 en liaison, soit avec l'accumulateur hydraulique 14, soit avec le réservoir 13.

Le manocontact 30 adresse un signal impulsionnel à l'électrovanne 29 quand deux conditions sont remplies,

— la pression du compresseur 5 est inférieure à un premier seuil,

— le déplacement de la commande d'accélération est supérieur à un deuxième seuil.

Le signal provenant du manocontact 30 provoque une impulsion de pression dans le conduit 20, qui accélère la turbine 9.

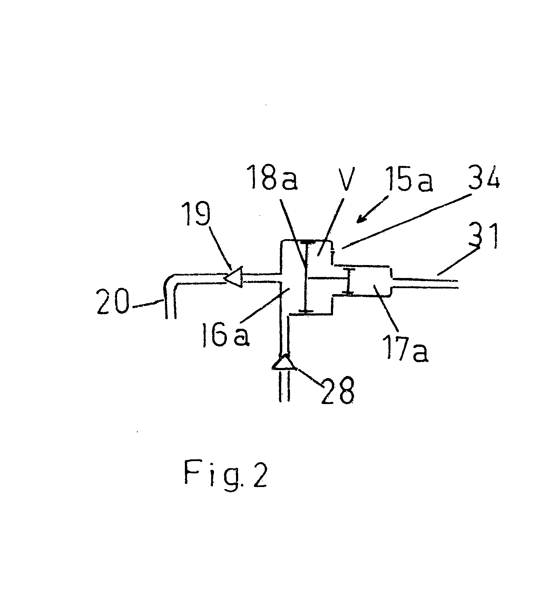

En variante, voir figure 2, on peut remplacer la capacité 15 à membrane par un dispositif 15a à piston étagé 18a définissant trois volumes, un volume 16a contenant l'huile de lubrification, un volume 17a contenant l'huile du circuit hydraulique et un volume intermédiaire V qui est mis à l'air libre par l'ouverture 34. Quand le volume 17a est relié à l'accumulateur hydraulique 14 le piston étagé 18a se déplace, il en résulte un accroissement de pression de l'huile de lubrification dans le volume 16a. Cette pression reste cependant inférieure à la pression de l'huile du circuit hydraulique approximativement dans le rapport des sections du piston étagé.

Ce dispositif permet des impulsions de pression prolongées en direction de la turbine 9, il permet donc une meilleure adaptation de l'écoulement aux conditions de fonctionnement de la turbine.

**Revendications**

1. Turbocompresseur de suralimentation d'un moteur à combustion interne pour l'équipement d'un véhicule, comprenant accouplés

— un compresseur (5), fournissant de l'air comprimé à l'alimentation du moteur (1),
— une turbine à gaz (6), entraînée par les gaz d'échappement du moteur et entrainant le compresseur (5),
— une turbine hydraulique (9) d'appoint, intervenant dans les conditions de fortes accélérations en basse vitesse, cette turbine étant alimentée par l'huile de lubrification duo moteur (1),

le véhicule étant par ailleurs doté d'un circuit hydraulique comprenant une pompe haute pression (11), un réservoir (13), et un accumulateur hydraulique (14) à pression régulée, caractérisé en ce qu'il comporte,

— une capacité (15) à deux compartiments séparés par une membrane (18), un premier compartiment (16) pour l'huile de lubrification et un deuxième compartiment (17) pour l'huile du circuit hydraulique, le premier compartiment étant interposé dans le circuit affecté à l'alimentation de la turbine d'appoint (9), et le deuxième compartiment étant relié au circuit hydraulique,
— des moyens (29) pour relier le deuxième compartiment (17) soit à l'accumulateur hydraulique (14), soit au réservoir (13),
— des moyens (28) pour protéger le circuit de lubrification quand l'huile affectée à l'alimentation de la turbine d'appoint (9) est portée en haute pression.

2. Turbocompresseur de suralimentation d'un moteur à combustion interne pour l'équipement d'un véhicule, comprenant accouplés

— un compresseur (5), fournissant de l'air comprimé à l'alimentation du moteur (1),
— une turbine à gaz (6), entraînée par les gaz d'échappement du moteur et entrainant le compresseur (5),
— une turbine hydraulique (9) d'appoint, intervenant dans les conditions de fortes accélérations en basse vitesse, cette turbine étant alimentée par l'huile de lubrification du moteur (1),

le véhicule étant par ailleurs doté d'un circuit hydraulique comprenant une pompe haute pression (11), un réservoir (13), et un accumulateur hydraulique (14) à pression régulée, caractérisé en ce qu'il comporte

— une capacité (15a) à trois compartiments définis par un piston étagé (18a); un premier compartiment (16a) pour l'huile de lubrification, un deuxième compartiment (17a) pour l'huile du circuit hydraulique et un troisième compartiment (V) intermédiaire, ouvert à l'air libre (34), le premier compartiment (16a) étant interposé dans le circuit affecté à l'alimentation de la turbine d'appoint (9), et le deuxième compartiment (17a) étant relié au circuit hydraulique,
— des moyens (29) pour relier le deuxième compartiment (17a) soit à l'accumulateur hydraulique (14), soit au réservoir (13),
— des moyens (28), pour protéger le circuit de lubrification quand l'huile affectée à l'alimentation de la turbine d'appoint (9) est protée en haute pression.

3. Turbocompresseur selon la revendication 1 ou 2, caractérisé en ce que les moyens (29) pour sélectionner les connexions hydrauliques du deuxième compartiment (17, 17a) de la capacité (15, 15a) se composent d'une vanne à trois voies (29) commandée par un manocontact (30) obéissant à deux consignes qui correspondent:

— au dépassement d'un seuil pour la course de la commande d'accélération,
— au franchissement d'un seuil inférieur, pour la pression du compresseur d'air.

**Patentansprüche**

1. Turboverdichter zur Aufladung einer Brennkraftmaschine für ein Fahrzeug mit folgenden miteinander verbundenen Teilen:

— einem Verdichter (5), der die verdichtete Luft zur Speisung der Brennkraftmaschine (1) liefert,
- einer Gasturbine (6), die durch die Abgase der Brennkraftmaschine angetrieben wird und den Verdichter (5) antreibt,
- einer hydraulischen Zusatzturbine (9), die unter Bedingungen mit hoher Beschleunigung bei geringer Geschwindigkeit eingreift, wobei diese Turbine durch das Schmieröl der Brennkraftmaschine (1) angetrieben wird,

wobei das Fahrzeug ferner mit einem Hydraulikkreis versehen ist einschließlich einer Hochdruckpumpe (11), eines Vorratsbehälters (13) und eines druckgeregelten Hydraulikspeichers (14), gekennzeichnet

- durch einen Raum (15) mit zwei durch eine Membran (18) unterteilten Abteilen, nämlich einem ersten Abteil (16) für das Schmieröl und einem zweiten Abteil (17) für das Öl des Hydraulikkreises, wobei das erste Abteil in dem der Speisung der Zusatzturbine (9) zugeordneten Kreis angeordnet und das zweite Abteil mit dem Hydraulikkreis verbunden sind,
- durch eine Einrichtung (29) zur Verbindung des zweiten Abteils (17) mit dem Hydraulikspeicher (14) oder mit dem Vorratsbehälter (13),
- durch eine Einrichtung (28) zum Schützen des Schmierkreises, wenn das der Speisung der Zusatzturbine (9) zugeordnete Öl auf Hochdruck gebracht ist.

2. Turboverdichter zur Aufladung einer Brennkraftmaschine für ein Fahrzeug mit folgenden miteinander verbundenen Teilen:

- einem Verdichter (5), der die verdichtete Luft zur Speisung der Brennkraftmaschine (1) liefert,
- einer Gasturbine (6), die durch die Abgase der Brennkraftmaschine angetrieben wird und den Verdichter (5) antreibt,
- einer hydraulischen Zusatzturbine (9), die unter Bedingungen mit hoher Beschleunigung bei geringer Geschwindigkeit eingreift, wobei diese Turbine durch das Schmieröl der Brennkraftmaschine (1) angetrieben wird,

wobei das Fahrzeug ferner mit einem Hydraulikkreis versehen ist einschließlich einer Hochdruckpumpe (11), eines Vorratsbehälters (13) und eines druckgeregelten Hydraulikspeichers (14), gekennzeichnet

- durch einen Raum (15a) mit drei durch einen Stufenkolben (18a) begrenzten Abteilen, nämlich einem ersten Abteil (16a) für das Schmieröl, einem zweiten Abteil (17a) für das Öl des Hydraulikkreises und einem zur freien Luft (34) offenen dritten Zwischenabteil (V), wobei das erste Abteil (17a) in dem der Speisung der Zusatzturbine (9) zugeordneten Kreis angeordnet und das zweite Abteil (17a) mit dem Hydraulikkreis verbunden sind,
- durch eine Einrichtung (29) zur Verbindung des zweiten Abteils (17a) mit dem Hydraulikspeicher (14) oder mit dem Vorratsbehälter (13),
- durch eine Einrichtung (28) zum Schützen des Schmierkreises, wenn das der Speisung der Zusatzturbine (9) zugeordnete Öl auf Hochdruck gebracht ist.

3. Turboverdichter nach Anspruch 1 oder 2, dadurch gekennzeichnet, daß die Einrichtung (29) zum Wählen der hydraulischen Verbindungen des zweiten Abteils (17, 17a) des Raumes (15, 15a) aus einem Dreiwegeventil (29) besteht, das durch einen Druckschalter (30) gesteuert wird, der zwei Einstellwerten gehorcht, die entsprechen

- dem Überschreiten einer Schwelle für den Hub der Beschleunigungssteuerung,
- dem Unterschreiten einer unteren Schwelle für den Druck des Luftverdichters.

## Claims

1. A turbocharger for forced induction of an internal combustion engine for installation in a vehicle, comprising coupled together,

- a compressor (5) supplying compressed air to the induction system of the engine (1),
- a gas turbine (6) driven by the engine exhaust gases and driving the compressor (5),
- a hydraulic supplementary turbine (9) coming into action under conditions of high accelerations at low speed, this turbine being supplied by the lubrication oil of the engine (1),

the vehicle being equipped furthermore with a hydraulic circuit comprising a high-pressure pump (11), a tank (13) and a governed-pressure hydraulic accumulator (14), characterised in that it comprises

- a capacity (15) containing two compartments separated by a diaphragm (18), a first compartment (16) for the lubricating oil and a second compartment (17) for the oil of the hydraulic circuit, the first compartment being interposed in the circuit provided for supplying the supplementary turbine (9), and the second compartment being connected to the hydraulic circuit,
- means (29) for connecting the second compartment (17) either to the hydraulic accumulator (14), or to the tank (13),
- means (28) for protecting the lubrication circuit when the oil provided for supplying the supplementary turbine (9) is brought to the high-pressure condition.

2. A turbocharger for forced induction of an internal combustion engine for installation in a vehicle, comprising couplet together,

— a compressor (5) supplying compressed air to the induction system of the engine (1),
— a gas turbine (6) driven by the engine exhaust gases and driving the compressor (5),
— a hydraulic supplementary turbine (9) coming into action under conditions of high accelerations at low speed, this turbine being supplied by the lubricating oil of the engine (1),

the vehicle being equipped furthermore with a hydraulic circuit comprising a high-pressure pump (11), a tank (13) and a governed-pressure hydraulic accumulator (14), characterised in that it comprises

— a capacity (15a) containing three compartments delimited by a stepped piston (18a), a first compartment (16a) for the lubricating oil, a second compartment (17a) for the oil of the hydraulic circuit and a third intermediate compartment (V), open to the ambient air (34), the first compartment (16a) being interposed in the circuit provided for supplying the complementary turbine (9), and the second compartment (17a) being connected to the hydraulic circuit,
— means (29) for connecting the second compartment (17a) either to the hydraulic accumulator (14) or to the tank (13),
— means (28) for protecting the lubrication circuit when the oil provided for supplying the supplementary turbine (9) is brought to the high-pressure condition.

3. A turbocharger according to claim 1 or 2, characterised in that the means (29) for selecting the hydraulic connections of the second compartment (17, 17a) of the capacity (15, 15a) comprise a threeway valve (29) operated by a pressure switch (30) complying with two preset factors which correspond:

— to exceeding a threshold for the path of the acceleration control,
— to rising above a lower threshold, for the pressure of the air compressor.

Fig 1

Fig. 2